# EUROPEAN PATENT SPECIFICATION

(11) **EP 2 486 303 B1**
(45) Date of publication and mention of the grant of the patent: **17.07.2013**
(21) Application number: 10765859.3
(22) Date of filing: 05.10.2010
(51) Int. Cl.: F16G 5/16

(54) **DRIVE BELT PROVIDED WITH A LAMINATED SET OF STEEL RINGS**
ANTRIEBSRIEMEN MIT EINEM LAMINIERTEN STAHLRINGSATZ
COURROIE D'ENTRAÎNEMENT POURVUE D'UN ENSEMBLE STRATIFIÉ DE BAGUES EN ACIER

(30) Priority: 06.10.2009 NL 1037364
(43) Date of publication of application: 15.08.2012
(73) Proprietor: Robert Bosch GmbH, 70442 Stuttgart (DE)
(72) Inventor: PENNINGS, Bert, NL-5052 CH Goirle (NL); TRAN, Minh-Duc, NL-5348 KX Oss (NL)
(74) Representative: Plevier, Gabriel Anton Johan Maria
(86) International application number: PCT/NL2010/000140
(87) International publication number: WO 2011/043648

(56) References cited:
- EP-A2- 0 989 325
- EP-A2- 1 055 738
- WO-A1-2006/054885
- US-A- 5 152 723

## Description

The present invention relates to a drive belt for use in the well-known pulley-type continuously variable transmission or CVT that is typically applied in motor vehicles. One well known type of drive belt is described in detail in EP-A-1 403 551 and is also referred to in the art as push belt. The known drive belt includes a multitude of steel segments that are provided with at least one, but typically two recesses, each recess accommodating a set of a number of mutually, concentrically nested flexible steel rings of the drive belt. In the art, the steel segments are also referred as transverse elements, the rings as hoops or endless bands and the laminated set of rings as endless tensile means or carrier. In the present type drive belt the transverse elements are not connected to the endless carrier, but rather slide along the circumference thereof during operation in the CVT. Also the individual rings of the endless carrier slide relative to one another during operation.

For the present drive belt application thereof, a ring is produced from maraging steel, which type of steel combines a comparatively favourable possibility to weld and plastically deform the material with the characteristics of great tensile strength and good resistance against both abrasive wear and bending and/or tensile stress fatigue, at least after the appropriate heat treatment thereof. The known rings are provided with a fair hardness of the core material for realising the properties of good tensile, yield and bending strength combined with a high resistance against metal fatigue, which ring core is encased in a substantially harder and thus wear resistant outer surface layer of the ring material. A thickness of the said hard surface layer is carefully controlled in manufacturing to limit the internal ring stress and to provide the ring with a sufficient elasticity to allow longitudinal bending as well as resistance against fatigue fracture. Of course, especially this latter feature is very significant in the pushbelt application of the rings, because of the numerous load and bending cycles it is subjected to during its service life.

The basics of the known manufacturing method for such rings have become well known in the art see for example WO 2006/054885 In particular, i.e. for creating the aforementioned hard surface layer, the known ring manufacturing method includes at least the process step of nitriding the ring material, typically of gas soft nitriding, i.e. of keeping the ring material in an atmosphere containing ammonia gas at a temperature of about 450 °C, as a result whereof nitrogen atoms diffuse into the said surface layer to form a nitride layer. The nitrogen diffusion depth, i.e. the thickness of the nitride layer depends on several parameters of the nitriding process such as the ammonia concentration at the ring surface and the process temperature and duration. The Japanese publication JP-A-2000-337453 mentions that a nitride layer thickness of 10 to 20 % of the total ring thickness would represent the optimum thickness for the drive belt application of the ring. Since the known drive belt rings are 0.185 mm thick, they should be provided with a nitride layer of 19 to 37 micron (µm) thickness in accordance with the known art. It is noted that, in the context of the present application, the thickness of the nitride layer is determined optically (with the aid of a microscope) on a polished and suitably etched cross-sectional surface of the ring.

The present invention aims to improve on the above-described state of the art and to further increase the service life of the drive belt and/or to reduce the manufacturing cost thereof. According to the invention such aim is realised by the drive belt incorporating the features of Claim 1 hereinafter. According the invention the fatigue strength of the endless carrier can be improved on the whole, by differentiating between the separate rings of the ring set in terms of the thickness of the nitride layer thereof. More in particular, it was found that in the sliding contact between two contiguous rings of the endless carrier, the surface of the rings is considerably less prone to wear and/or contact loading than in the sliding contact with the transverse elements. Thus, in accordance with the present invention, the thickness of the nitride layer of the in-between rings of the carrier, i.e. of the rings located in-between a radially outermost and a radially innermost ring thereof, is less than the thickness of the nitride layer at the radial outside of the carrier, i.e. at the radial outwardly oriented surface of the radially outermost ring thereof, and/or is less than the thickness of the nitride layer at the radially inside of the carrier, i.e. at the radially inwardly oriented surface of the radially innermost ring thereof. Preferably, the nitride layer at the radial outside of the carrier and/or at the radial inside of the carrier is 1.5 to 4 times as thick as the nitride layer of the in-between rings, more preferably about twice as thick.

At least the in-between rings of the endless carrier of the drive belt according to the invention can be manufactured, in particular nitrided, more cost-effectively and/or faster. Further, the fatigue strength of the drive belt as a whole is improved by the present invention.

Specifically in relation to a maraging steel alloy taken form the range of alloys having a basic composition with 17 to 19 mass-% nickel, 4 to 6 mass-% molybdenum, 8 to 18 mass-% cobalt and with balance iron, possibly with some, i.e. less than 1 mass-%, titanium added, the optimum thickness of the nitride layer has been investigated. According to the invention the in-between rings are in this case optimally provided with a nitride layer between 10 and 18 µm thick, whereas the nitride layer of the radial outside of the endless carrier and/or of the radial inside of the endless carrier is provided with a thickness in the range between 25 and 35 µm.

The basic principle of the invention will now be elucidated by way of example, along a drawing in which:
Figure 1 provides a schematically depicted example of the well-known continuously variable transmission provided with a drive belt,
Figure 2 is a section of the drive belt shown in perspective,
Figure 3 figuratively represents the presently relevant part of the known manufacturing method of the ring component of the drive belt,
Figure 4 is a schematic cross-section of the endless carrier of the drive belt in accordance with the prior art, and
Figure 5 is a schematic cross-section of the endless carrier of the drive belt in accordance with the invention.

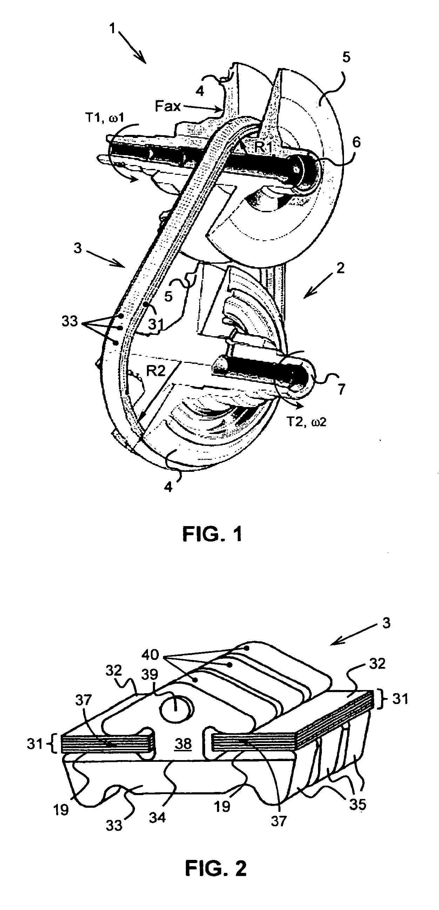

Figure 1 shows the central parts of a known continuously variable transmission or CVT that is commonly applied in the drive line of motor vehicles between the engine and the drive wheels thereof. The transmission comprises two pulleys 1, 2, each provided with two conical pulley discs 4, 5, where between a predominantly V-shaped pulley groove is defined and whereof one disc 4 is axially moveable along a respective pulley shaft 6, 7 over which it is placed. A drive belt 3 is wrapped around the pulleys 1, 2 for transmitting a rotational movement w and an accompanying torque T from the one pulley 1, 2 to the other 2, 1. The transmission generally also comprises activation means that impose on the said at least one disc 4 an axially oriented clamping force Fax directed towards the respective other pulley disc 5 such that the belt 3 is clamped there between. Also, a (speed) ratio of the transmission between the rotational speed of the driven pulley 2 and the rotational speed of the driving pulley 1 is determined thereby.

An example of a known drive belt 3 is shown in more detail figure 2 in a section thereof, which belt 3 incorporates an endless carrier 31. The endless carrier 31 is shown only in part and -in this example- is composed of two sets of thin and flat, i.e. band-like, flexible steel rings 32. The belt 3 further comprises a multitude of plate-like transverse elements 33 that are held together by the endless carrier 31 that is located in a recess 37 of the transverse elements 33. The transverse elements 33 take-up the said clamping force Fax, such when an input torque Tin is exerted on the so-called driving pulley 1, friction between the discs 4, 5 and the belt 3, causes a rotation of the driving pulley 1 to be transferred to the so-called driven pulley 2 via the likewise rotating drive belt 3.

During operation in the CVT the drive belt 3 and in particular the rings 32 thereof are subjected to a cyclically varying tensile and bending stresses, i.e. a fatigue load. Typically the resistance against metal fatigue, i.e. the fatigue strength of the rings 32 thus determines the functional life span of the drive belt 3 at a given torque T to be transmitted thereby. Therefore, it has been a long standing general aim in the development of the drive belt manufacturing method to realise a required ring fatigue strength at a minimum combined material and processing cost.

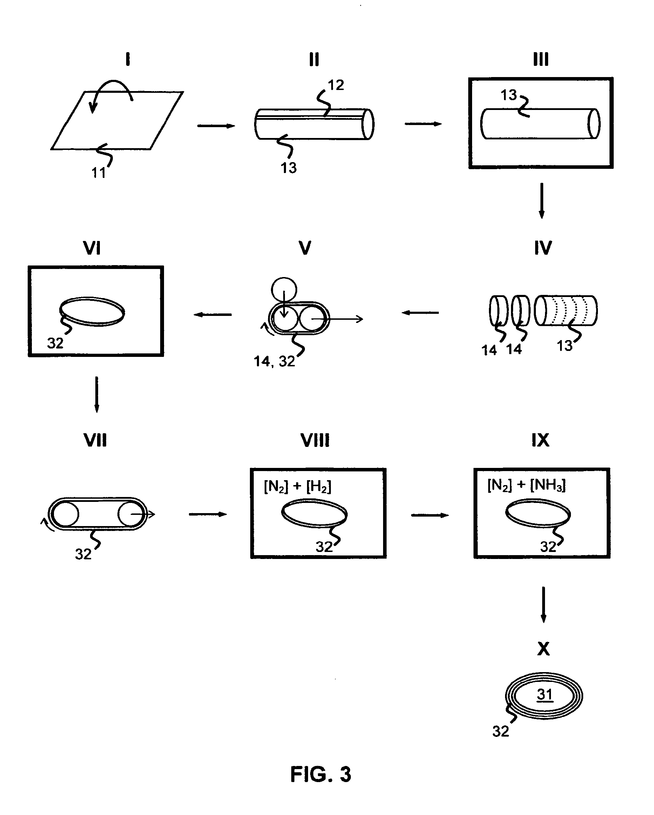

Figure 3 illustrates a relevant part of the known manufacturing method for the drive belt ring component 32, wherein the separate process steps are indicated by way of Roman numerals. In a first process step I a thin sheet or plate 11 of base material that typically has a thickness in the range between 0.4 mm and 0.5 mm is bend into a cylindrical shape and the meeting plate ends 12 are welded together in a second process step II to form an open, hollow cylinder or tube 13. In a third step III of the process the tube 13 is annealed. Thereafter, in a fourth process step IV the tube 13 is cut into a number of annular hoops 14, which are subsequently -process step five V- rolled to reduce the thickness thereof to less than 0.250 mm, typically about 185 µm, while being elongated. After rolling the hoops 14 are usually referred to as rings 32. The rings 32 are then subjected to a further or ring annealing process step VI for removing the work hardening effect of the previous rolling process (i.e. step five V) by recovery and re-crystallisation of the ring material at a temperature considerably above 600 degree Celsius, e.g. about 800 degree Celsius. Thereafter, in a seventh process step VII, the rings 32 are calibrated, i.e. they are mounted around two rotating rollers and stretched to a predefined circumference length by forcing the said rollers apart. In this seventh process step VII, also an internal stress distribution is imposed on the rings 32. Thereafter, the rings 32 are heat-treated in two separate process steps, namely an eighth process step VIII of ageing or bulk precipitation hardening and a ninth process step IX of nitriding or case hardening. More in particular, both such heat-treatments involve heating the rings 32 in an industrial oven or furnace containing a controlled gas atmosphere that typically is composed of nitrogen and some, e.g. about 5 volume-% of hydrogen for ring ageing and of nitrogen and ammonia for ring nitriding. Both heat-treatments typically occur within the temperature range from 400 degrees Celsius to 500 degrees Celsius and can each last for about 45 to over 120 minutes in dependence on the base material (maraging steel alloy composition) for the rings 32, as well as on the mechanical properties desired for the rings 32. In this latter respect it is remarked that, typically, it is aimed at a core hardness value of 520 HV1.0 or more, a surface hardness value of 875 HV0.1 or more and at a thickness of the nitrided surface layer, alternatively denoted nitrogen diffusion zone, in the range from 19 to 37 µm. Finally, a laminated set 31 of thus processed rings 32, i.e. the endless carrier 31, is formed by radially stacking, i.e. nesting, a number of rings 32, as is further indicated in figure 3 in the last depicted tenth process step X. Obviously, the rings 32 of the laminated set 31 have to be suitably dimensioned therefor, e.g. have to differ slightly in circumference length to allow the rings 31 to be fitted one around the other. To this end the rings 32 of the laminated set 31 are typically purposively selected from a stock of rings 32.

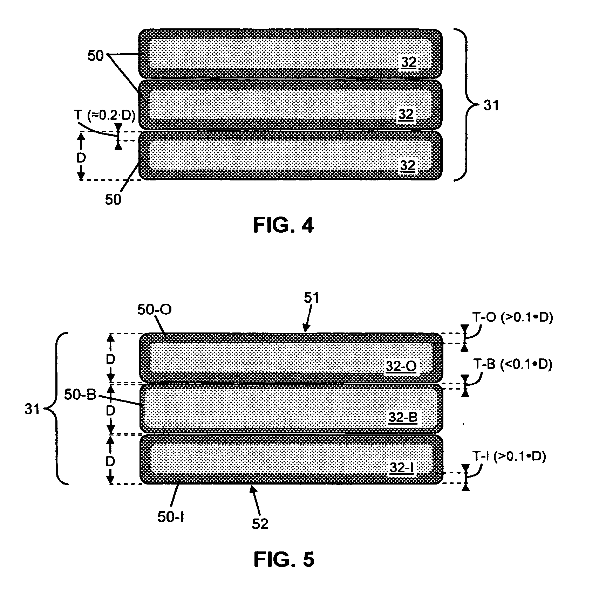

Figure 4 represents a greatly enlarged, schematically drawn cross-section of the known endless carrier 31, however comprising only three rings 32 in contrast with the 6 to 12 rings 32 that are typically applied in each carrier 31 in practice. Figure 4 illustrates the feature of the nitrided surface layer 50 (by the darker grey tone) of the rings 32 thereof and its thickness relative to the total thickness of the rings 32. In figure 4 the thickness T of a respective nitride layer 50 amounts to 20% of the total thickness D of a respective ring 32 in accordance with the known art.

According to the invention such nitride layer thickness T should, however, amount to less than 10% of the total ring thickness D to achieve optimum fatigue properties for the ring 32. On the other hand, the endless carrier 31 as a whole should be able to withstand the wear and contact loading caused by the sliding contact with the transverse elements 33 during operation, which is known to require a thicker nitride layer of more than 10% of the total ring thickness D. Thus, as an improvement of the endless carrier 31 as a whole, it is presently proposed to compose the carrier 31 of in-between rings 32-B, i.e. of the rings 32-B of the carrier 31 that are located in-between a radially outermost ring 32-O and a radially innermost ring 32-I thereof, that have a nitride layer 50-B that is thinner than the nitride layer 50-O of at least the radially outwardly oriented surface 51 of the radially outermost ring 32-O and/or the nitride layer 50-I of at least the radially inwardly oriented surface 52 of the radially innermost ring 32-I, as is schematically illustrated in figure 5 by the nitride layer thickness T-B being smaller than the nitride layer thickness T-O and/or T-I.

## Claims

1. Drive belt (3) with steel segments (33) and with at least one carrier (31) that is accommodated in a recess (37) of the steel segments (33) and that is build from a number flexible steel rings (32) that are mutually nested in the radial direction and that are provided with a nitrided surface layer (50), **characterized in that** a thickness of the nitride layer (50-B) of in-between rings (32-B) of the carrier (31), i.e. of the rings (32-B) located in-between a radially outermost ring (32-O) and a radially innermost ring (32-I) of the carrier (31), is less than a thickness of the nitride layer (50-O) at the radial outside of the carrier (31), i.e. at a radially outwardly oriented surface (51) of the radially outermost ring (32-O) thereof, and/or is less than the thickness of a nitride layer (50-I) at a radial inside of the carrier (31), i.e. at a radially inwardly oriented surface (52) of the radially innermost ring (32-I) thereof.

2. Drive belt (3) according to claim 1, **characterized in that** the thickness of the nitride layer (50-B) of at least one of the in-between rings (32-B) of the carrier (31) amounts to less than 10% of a total thickness of that one in-between ring (32-B) and, preferably, amounts to more than 5% of the said total thickness.

3. Drive belt (3) according to claim 2, **characterized in that** the thickness of the nitride layer (50-B) of the in-between rings (32-B) of the carrier (31) is essentially the same for all of the in-between rings (32-B) of the carrier (31).

4. Drive belt (3) according to claim 1, 2 or 3, **characterized in that** the thickness of the nitride layer (50-O) of the radially outermost ring (32-O), measured in radial direction at the location of at least the radially outwardly oriented surface (51) thereof, amounts to more than 10% and, preferably, to less than 20% of a total thickness of the outermost ring (32-O) measured **in that** direction and/or that the thickness of the nitride layer (50-I) of the radially innermost ring (32-I), measured in radial direction at the location of at least the radially inwardly oriented surface (52) thereof amounts to more than 10% and, preferably, to less than 20% of a total thickness of the innermost ring (32-O) measured **in that** direction.

5. Drive belt (3) according to claim 1, 2 or 3, **characterized in that** the thickness of the nitride layer (50-B) of the in-between rings (32-B) measured in radial direction amounts to between 25% and 66%, preferably to about 50%, of the thickness of the nitride layer (50-O) of the radially outermost ring (32-O), measured in radial direction at the location of at least the radially outwardly oriented surface (51) thereof, and/or of the thickness of the nitride layer (50-I) of the radially innermost ring (32-I), measured in radial direction at the location of at least the radially inwardly oriented surface (52) thereof.

6. Drive belt (3) according to claim 1, 2 or 3, **characterized in that** a total thickness in radial direction of the rings (32) of the carrier (31) amounts to about 0.185 mm, **in that** the thickness of the nitride layer (50-B) of in-between rings (32-B) in that direction has a value in the range from 10 to 18 micron, and **in that** the thickness of the nitride layer (50-O) of the radially outermost ring (32-O), at the location of at least the radially outwardly oriented surface (51) thereof, and of the nitride layer (50-I) of the radially innermost ring (32-I), at the location of at least the radially inwardly oriented surface (52) thereof, has a value in the range from 25 to 35 micron.

7. Drive belt (3) according to one or more of the preceding claims, **characterized in that**, the rings (32) of the carrier (31) are made of maraging steel with a composition within the range of 17 to 19 mass-% nickel, 4 to 6 mass-% molybdenum, 8 to 18 mass-% cobalt, supplemented with iron, with possibly less than 1 mass-% titanium and with a small amount of inevitable contaminations.

## Patentansprüche

1. Antriebsriemen (3) mit Stahlsegmenten (33) und mit mindestens einem Träger (31), der in einer Vertiefung (37) der Stahlsegmente (33) untergebracht ist und aus einer Reihe flexibler Stahlringe (32) gebildet ist, die in radialer Richtung miteinander verschachtelt sind und mit einer nitrierten Oberflächenschicht (50) bereitgestellt sind,
**dadurch gekennzeichnet, dass**
eine Dicke der Nitridschicht (50-B) von Zwischenringen (32-B) des Trägers (31), d. h. der Ringe (32-B), die zwischen einem radial äußersten Ring (32-O) und einem radial innersten Ring (32-1) des Trägers (31) angeordnet sind, geringer ist als die Dicke der Nitridschicht (50-O) an der radialen Außenseite des Trägers (31), d. h. an einer radial nach außen gerichteten Oberfläche (51) des radial äußersten Ringes (32-O) davon,
und/oder geringer ist als die Dicke einer Nitridschicht (50-1) an einer radialen Innenseite des Trägers (31), d. h. an einer radial nach innen gerichteten Oberfläche (52) des radial innersten Ringes (32-1) davon.

2. Antriebsriemen (3) nach Anspruch 1, **dadurch gekennzeichnet, dass** die Dicke der Nitridschicht (50-B) von mindestens einem der Zwischenringe (32-B) des Trägers (31) weniger als 10 % der Gesamtdicke des einen Zwischenrings (32-B) beträgt und vorzugsweise mehr als 5 % der Gesamtdicke beträgt.

3. Antriebsriemen (3) nach Anspruch 2, **dadurch gekennzeichnet, dass** die Dicke der Nitridschicht (50-B) der Zwischenringe (32-B) des Trägers (31) im Wesentlichen die gleiche für alle der Zwischenringe (32-B) des Trägers (31) ist.

4. Antriebsriemen (3) nach Anspruch 1, 2 oder 3, **dadurch gekennzeichnet, dass** die Dicke der Nitridschicht (50-O) des radial äußersten Ringes (32-O), gemessen in radialer Richtung, an der Position mindestens der radial nach außen gerichteten Oberfläche (51) davon mehr als 10 % beträgt und vorzugsweise weniger als 20 % der Gesamtdicke des in dieser Richtung gemessenen äußersten Ringes (32-O)
und/oder dass die Dicke der Nitridschicht (50-I) des radial innersten Ringes (32-1), gemessen in radialer Richtung, an der Position mindestens der radial nach innen gerichteten Oberfläche (52) davon mehr als 10 % beträgt und vorzugsweise weniger als 20 % der Gesamtdicke des in dieser Richtung gemessenen innersten Rings (32-O) beträgt.

5. Antriebsriemen (3) nach Anspruch 1, 2 oder 3, **dadurch gekennzeichnet, dass** die Dicke der Nitridschicht (50-B) der Zwischenringe (32-B), gemessen in radialer Richtung, zwischen 25 % und 66 % beträgt, vorzugsweise etwa 50 % der Dicke der Nitridschicht (50-O) des radial äußersten Rings (32-O), gemessen in radialer Richtung, an der Position mindestens der radial nach außen gerichteten Oberfläche (51) davon und/oder der Dicke der Nitridschicht (50-I) des radial innersten Rings (32-I), gemessen in radialer Richtung an der Position mindestens der radial nach innen gerichteten Oberfläche (52) davon.

6. Antriebsriemen (3) nach Anspruch 1, 2 oder 3, **dadurch gekennzeichnet, dass** eine Gesamtdicke in radialer Richtung der Ringe (32) des Trägers (31) etwa 0,185 mm beträgt, und dass die Dicke der Nitridschicht (50-B) der Zwischenringe (32-B) in dieser Richtung einen Wert im Bereich von 10 bis 18 Mikrometer aufweist,
und dadurch, dass die Dicke der Nitridschicht (50-O) des radial äußersten Ringes (32-O) an der Position mindestens der radial nach außen gerichteten Oberfläche (51) davon und der Nitridschicht (50-I) des radialen innersten Rings (32-1) an der Position der mindestens radial nach innen gerichteten Oberfläche (52) davon einen Wert im Bereich von 25 bis 35 Mikrometer aufweist.

7. Antriebsriemen (3) nach einem oder mehreren der vorherigen Ansprüche, **dadurch gekennzeichnet, dass** die Ringe (32) des Trägers (31) aus martensitaushärtendem Stahl mit einer Zusammensetzung innerhalb des Bereichs von 17 bis 19 Massen-% Nickel, 4 bis 6 Massen-% Molybdän, 8 bis 18 Massen-% Kobalt, ergänzt mit Eisen, mit möglichst weniger als 1 Massen-% Titan und mit einer geringen Menge unvermeidlicher Verunreinigungen hergestellt sind.

## Revendications

1. Courroie d'entraînement (3) dotée de segments d'acier (33) et d'au moins un support (31) logé dans un creux (37) des segments d'acier (33) et formé d'un certain nombre d'anneaux flexibles (32) en acier placés mutuellement dans la direction radiale et dotés d'une couche nitrurée de surface (50),
**caractérisée en ce que**
l'épaisseur de la couche de nitrure (50-B) des anneaux intermédiaires (32-B) du support (31), c'est-à-dire des anneaux (32-B) situés entre un anneau radialement extérieur (32-O) et un anneau radialement intérieur (32-1) du support (31), est inférieure à l'épaisseur de la couche de nitrure (50-O) sur le côté situé radialement l'extérieur du support (31), c'est-à-dire sur une surface (51) orientée radialement à l'extérieur de son anneau radialement extérieur (32-O) et/ou est inférieure à l'épaisseur de nitrure (50-I) située radialement à l'intérieur du support (31), c'est-à-dire sur une surface (52) orientée radialement vers l'intérieur de son anneau radialement intérieur (32-1)

2. Courroie d'entraînement (3) selon la revendication 1, **caractérisée en ce que** l'épaisseur de la couche de nitrure (50-B) d'au moins un des anneaux intermédiaires (32-B) du support (31) représente moins de 10 % de l'épaisseur totale de cet anneau intermédiaire (32-B) et de préférence plus de 5 % de ladite épaisseur totale.

3. Courroie d'entraînement (3) selon la revendication 2, **caractérisée en ce que** l'épaisseur de la couche de nitrure (50-B) des anneaux intermédiaires (32-B) du support (31) est essentiellement identique pour tous les anneaux intermédiaires (32-B) du support (31).

4. Courroie d'entraînement (3) selon les revendications 1, 2 ou 3, **caractérisée en ce que** l'épaisseur de la couche de nitrure (50-O) de l'anneau radialement extérieur (32-O), mesurée dans la direction radiale à l'emplacement au moins de sa surface (51) orientée radialement à l'extérieur, ne représente pas plus de 10 % et de préférence moins de 20 % de l'épaisseur totale de l'anneau extérieur (32-O) mesurée dans cette direction et/ou **en ce que** l'épaisseur de la couche de nitrure (50-1) de l'anneau radialement intérieur (32-1), mesurée dans la direction radiale à l'emplacement au moins de sa surface (52) orientée radialement vers l'intérieur, représente plus de 10 % et de préférence moins de 20 % de l'épaisseur totale de l'anneau intérieur (32-O) mesurée dans cette direction.

5. Courroie d'entraînement (3) selon les revendications 1, 2 ou 3, **caractérisée en ce que** l'épaisseur de la couche de nitrure (50-B) des anneaux intermédiaires (32-B), mesurée dans la direction radiale, représente entre 25 % et 66 % et de préférence environ 50 % de l'épaisseur de la couche de nitrure (50-O) de l'anneau radialement extérieur (32-O), mesurée dans la direction radiale à l'emplacement au moins de sa surface (51) orientée radialement vers l'extérieur, et/ou de l'épaisseur de la couche de nitrure (50-1) de l'anneau radialement intérieur (32-I), mesurée dans la direction radiale à l'emplacement au moins de sa surface (52) orientée radialement vers l'intérieur.

6. Courroie d'entraînement (3) selon les revendications 1, 2 ou 3, **caractérisée en ce que** l'épaisseur totale dans la direction radiale des anneaux (32) du support (31) représente environ 0,185 mm, **en ce que** l'épaisseur de la couche de nitrure (50-B) des anneaux intermédiaires (32-B) dans cette direction a une valeur comprise dans la plage de 10 à 18 micromètres et **en ce que** l'épaisseur de la couche de nitrure (50-O) de l'anneau radialement extérieur (32-O) à l'emplacement au moins de sa surface (51) orientée radialement vers l'extérieur et de la couche de nitrure (50-1) de l'anneau radialement intérieur (32-1) à l'emplacement d'au moins sa surface (52) orientée vers l'intérieur a une valeur comprise dans la plage de 25 à 35 micromètres.

7. Courroie d'entraînement (3) selon l'une ou plusieurs des revendications précédentes, **caractérisée en ce que** les anneaux (32) du support (31) sont réalisés en acier à trempe secondaire martensitique dont la composition est de 17 à 19 % en masse de nickel, de 4 à 6 % en masse de molybdène, de 8 à 18 % en masse de cobalt, le solde étant le fer avec éventuellement moins que 1 % en masse de titane et une petite quantité d'impuretés inévitables.
